(19) Europäisches Patentamt

European Patent Office

Office européen des brevets

(11) EP 0 904 649 B1

(12) EUROPEAN PATENT SPECIFICATION

(45) Date of publication and mention
of the grant of the patent:
**11.06.2003 Bulletin 2003/24**

(51) Int Cl.⁷: **H04L 25/03**

(86) International application number:
**PCT/EP97/01619**

(21) Application number: **97918090.8**

(22) Date of filing: **01.04.1997**

(87) International publication number:
**WO 97/048218 (18.12.1997 Gazette 1997/54)**

(54) **MSLE DECODER WITH NEURAL NETWORK**

MLSE-DEKODER MIT NEURONALNETZWERK

DECODEUR A ESTIMATION SEQUENTIELLE DE VRAISEMBLANCE MAXIMALE ET A RESEAU NEURONAL

(84) Designated Contracting States:
**DE FI FR SE**

(30) Priority: **11.06.1996 GB 9612154**

(43) Date of publication of application:
**31.03.1999 Bulletin 1999/13**

(73) Proprietor: **Motorola Limited
Basingstoke, Hampshire RG22 4PD (GB)**

(72) Inventors:
• **GOLDING, Paul, Adrian
Wroughton, Swindon, SN4 9EQ (GB)**
• **JONES, Alan
Wiltshire SN11 0QG (GB)**

(74) Representative: **Potts, Susan Patricia et al
Motorola European Intellectual Property
Operations
Midpoint
Alencon Link
Basingstoke, Hampshire RG21 7PL (GB)**

(56) References cited:
**EP-A- 0 294 116** **US-A- 5 548 684**

• **IEE PROC. -COMMUN., vol. 142, no. 3, June 1995, pages 165-171, XP000522228 S. THEODORIDIS ET AL.: "Schemes for equalisation of communication channels with nonlinear impairments"**
• **INTERNATIONAL CONFERENCE ON NEURAL NETWORKS/ WORLD CONGRESS ON COMPUTATIONAL INTELLIGENCE, ORLANDO, JUNE 27 - 29, 1994, vol. 6, 27 June 1994, INSTITUTE OF ELECTRICAL AND ELECTRONICS ENGINEERS, pages 3921-3925, XP000510533 BIRGMEIER M: "A DIGITAL COMMUNICATION CHANNEL EQUALIZER USING A KALMAN-TRAINED NEURAL NETWORK"**
• **IEICE TRANSACTIONS ON COMMUNICATIONS, vol. E77-B, no. 5, 1 May 1995, pages 647-649, XP000540894 KEN IWASAKI: "AN ADAPTIVE EQUALIZER EQUIPPED WITH A NEURAL NETWORK AND A VITERBI DECODER"**
• **PROCEEDINGS OF ICC/SUPERCOMM'94, vol. 1, 1 - 5 May 1994, NEW ORLEANS, LA, USA, pages 250-254, XP002035875 NAIR S. K., MOON J. : "Nonlinear equalization for data storage channels"**
• **IEEE TRANSACTIONS ON SIGNAL PROCESSING, vol. 42, no. 9, 1 September 1994, pages 2470-2479, XP000477183 ZENGJUN XIANG ET AL: "POLYNOMIAL PERCEPTRONS AND THEIR APPLICATIONS TO FADIDNG CHANNEL EQUALIZATION AND CO-CHANNEL INTERFERENCE SUPPRESSION"**

**Description**

Field of the Invention

This invention relates, in general, to an equaliser, and is particularly, but not exclusively, applicable to an adaptive equaliser used in communication apparatus for the purpose of Viterbi decoding, typically including a process of Maximum Likelihood Sequence Estimation (MLSE).

Summary of the Prior Art

In modem communication systems, such as the cellular pan-European Global System for Mobile (GSM) communications, forward error correction (FEC) of the physical radio channel is provided by means of signal encryption. More specifically, in the case of the GSM communication system, this encryption takes the form of convolutional coding.

The complex nature of these codes requires extensive computational (processor) power, with the optimum decoding process provided by a Viterbi decoding algorithm. In the Viterbi algorithm, decoded bits of information are output in a ratio of one output bit per input bit. However, the decoding process also provides additional information which can be utilised to allow multiple output bits (say N) to be generated per input bit, where each N-bits represents a confidence measure of the actual output bit. The use of this confidence measure is often referred to as "soft-decision" decoding. One particular method used to provide additional confidence information requires the output of metric-difference values (or "Likelihood" values, L) associated with each decision point along a "survivor path" of a Viterbi (state) trellis.

With respect to the Viterbi trellis (and algorithm), an output sequence is determined based upon the most likely path through a logical trellis of states consisting of logical "0"s and logical "1"s that are distributed over time. More particularly, at reception of a signal, a measurement of the most likely bit sequence for the signal is made by making distance measurements ("branch metric calculations") between received data bits and hypothesised data bits. In fact, the L-values provide a measurement of an absolute distance between two alternative branch metrics that converge to a decision point in the Viterbi state trellis along the survivor path. Furthermore, since paths through the trellis converge (with time) to convergence points, these convergence points present an opportunity to discard, at these junctures, all paths except the most likely. Specifically, the path offering the smallest distance (i.e. the largest branch metric) is the path retained, while the others are discarded. Subsequently, the lowest L-value ($L_{MIN}$) for the survivor path is used as an index to an array of threshold values, with a received speech (or data) frame marked bad and rejected if $L_{MIN}$ is lower than a corresponding threshold.

As indicated above, the likelihood values can be used to provide "soft" output decisions for each bit input into the Viterbi algorithm. Indeed, an application for the Likelihood values is the so-called Soft Output Viterbi Algorithm (SOVA) that uses the L-values to iterate the survivor path decisions until convergence occurs on a final optimum path. Also, the L-values may be used to facilitate a reduced complexity (non-iterative) SOVA to provide a confidence measure of a whole (or portion) of the speech frame. An example of this form of reduced complexity SOVA arises in the Window Error Detection algorithm used in GSM half-rate coding to provide a mechanism for assessing quality of a decoded frame, whereby the quality assessment (measurement) is used to determine subsequent acceptance or rejection (erasure) of the decoded speech (or data) frame.

Typically, a Digital Signal Processor (DSP) is arranged to execute the Viterbi algorithm.

An example of a equalization schemes are presented in "Schemes for equalisation of communication channels with nonlinear impairments", by S. Theodoridis et al, IEE Proceedings - Communications, Vol. 1422, no. 3 1995 pages 165-171. The article describes two techniques for equalisation of nonlinear intersymbol interference. One technique is a symbol by symbol technique built around a conventional decision feedback equaliser by embedding a neural radial basis function network. The other scheme is maximum likelihood method exploiting the classificatrion nature of an equaliser. A Viterbi minimisation approach is employed which circumvents the need for an explicit channel estimation.

An example of a neural network based equalizer for for a digital communications system is described in "A Digital Communication CHannel Equalizer Using a Kalman-Trained Neural Network" by M. Birgmeier, Intemation Conference on Neural Networks World Congress on Computational Intelligence, Orlando, June 27-29, 1994, vol. 6, IEEE, pages 3921-3925. The article describes an equalizer employiung a neural network trained using an extended Kalman algorithm.

Unfortunately, the present-day structure of Viterbi decoders is performance optimised for symbol samples influenced by (or exhibiting) a Gaussian distribution (caused by such effects as noise on symbols transmitted over a radio channel), and is unable to linearly separate a symbol sample between alternate logical states of the Viterbi state trellis when that symbol sample is influenced by a non-Gaussian distribution, such as caused by co-channel interference (CCI). As such, performance of the Viterbi algorithm becomes sub-optimum in an interference limited environment where statistics are non-Gaussian and the interference is correlated, while the performance of the Viterbi decoder (having a non-linear MLSE equaliser structure) is maximised in an uncorrelated noisy environment. Therefore, in relation to a cellular mobile communication system (in which SNR and mobile unit speed, for example, can vary both jointly and independently (subject to a prevalent cell environment, as will be understood)) it is possible to observe patterns in the input signal space that are not linearly separable.

Furthermore, for next generation communication systems, such as the Universal Mobile Telecommunication System (UMTS), air-interface symbol rates will necessarily be significantly greater than for second generation digital systems, such as GSM. Indeed, the use of LMS-type convergence algorithms for decision feedback equalisers (DFEs), basically containing a feedback network between a matched filter and Viterbi algorithm (as will be understood), presents an inherent problem associated with the selection of a suitable step-size for up-dating filter tap weights in the DFE; with a step-size often selected to provide merely the best average filter performance. However, in a single feedback filter network (i.e. the classical DFE structure) it is not possible to adapt the filter fast enough to cope with a rapid change in signal statistics that render the selected step-size (and hence the performance of the filter) far from optimum in relation to MLSE.

As such, a need exists for an improved method of Viterbi decoding that takes into account non-Gaussian effects (prevalent in communication systems and caused by CCI, for example) that impair decoding and also results in a sub-optimum performance in the decision-making process of the Viterbi algorithm (and particularly in assessing the survivor path through the Viterbi state trellis).

Summary of the Invention

In a first aspect of the present invention there is provided a Viterbi decoder having a trellis associated therewith for decoding a symbol sample subjected to non-Gaussian distributed interference that distorts a position of the symbol sample in input signal space, the Viterbi decoder comprising: a neural network arranged to perform non-linear separation of received symbol samples within the input signal space and having an adjustable operating configuration; and means for adjusting the operating configuration of the neural network to construct a non-linear decision boundary between alternate logical states for the symbol sample in the input signal space wherein the neural network is adapted to estimate distortion in the position of the symbol sample and to select a path through the Viterbi trellis based on said estimation, thereby to optimise the Viterbi decoder for an interference limited environment.

Preferably, the means for adjusting includes: means for classifying an area of input signal space as being indicative of each of the alternate logical states; and means for selecting a particular one of the alternate logical states as being that of the symbol sample when the symbol sample is located within its area. Furthermore, an equi-distant decision boundary nominally separates the alternate logical states and the means for selecting may select the particular one of the alternate logical states for the symbol sample when the symbol sample is located at a point within its associated area that transgresses the equi-distant decision boundary.

In a second aspect of the present invention there is provided a method of Viterbi decoding a symbol sample subjected to non-Gaussian distributed interference that distorts a position of the symbol sample in input signal space of a Viterbi decoder having a neural network arranged to perform non-linear separation of received symbol samples within the input signal space and having an adjustable operating configuration, the method comprising the step of: adjusting the operating configuration of the neural network to construct a non-linear decision boundary between alternate logical states for the symbol sample in the input signal space estimating distortion in the position of the symbol sample, and selecting a path through the Viterbi trellis based on said estimation, thereby to optimise the Viterbi decoder for an interference limited environment.

Exemplary embodiment of the invention will now be described with reference to the accompanying drawings.

Brief Description of the Drawings

FIG. 1 is a representation of a prior art convolutional coder.

FIG. 2 shows a prior art Viterbi state trellis containing a multitude of possible paths.

FIG. 3 illustrates an association of likelihood (L-) values with logical states on the Viterbi state trellis of FIG. 2.

FIG. 4 represents a decision process by which a branch metric of a symbol sample influenced by a Gaussian distribution is selected to determine a survivor path in the Viterbi trellis of FIG. 2.

FIG. 5 is indicative of uncertainty introduced into the decision process of FIG. 4 arising from a symbol sample influenced by both a Gaussian and non-Gaussian distribution.

FIG. 6 is a block diagram of a receiver and, especially, a Viterbi decoder according to the present invention.

FIG. 7 is a representation of a calibration process in symbol sample space for a multi-layer perceptron neural network (MLPNN) used in FIG. 6

FIG. 8 represents how a decision boundary is massaged by the MLPNN of FIG. 7 to compensate for a non-Gaussian distribution of a symbol sample applied to a Viterbi algorithm.

Detailed Description of a Preferred Embodiment

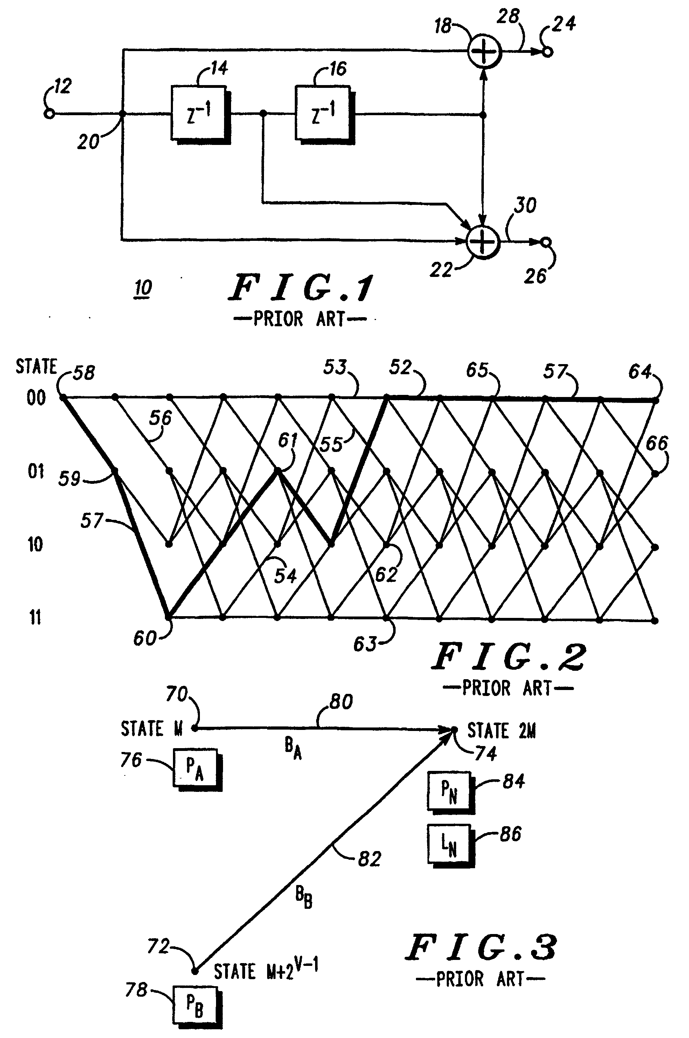

Referring to FIG. 1 there is shown a representation of a prior art convolutional coder 10 that is used to encode (prior to transmission) information bits of an input signal 12. More particularly, input bits are shifted on a bit-by-bit basis into register (memory) elements 14 and 16, at which point the register elements 14 and 16 are selectively tapped and logically combined (usually with and input bit). In the case of convolutional coding, logical combination typically takes the form of an exclusive-OR (XOR) function. With particular regard to FIG. 1, register element 16 is tapped and XORed in logic gate 18 with input bit 20. Also, register elements 16 is tapped and XORed in logic gate 22 with input bit 20 and the contents of register element 14. Logic gates 18 and 22 provide (at outputs 24 and 26, respectively) convolutionally encoded output data bits 28 and 30. The convolutional coder 10 of FIG. 1 is therefore said to have a constraint length of three (3), indicating the total number of bits of the input signal 12 used in the encoding operation, and a rate of 1/2, i.e. that every input bit produces two (2) output bits.

Although, for the sake of brevity and simplicity, only two register elements are illustrated, it will be appreciated that a convolutional coder will typically comprise several such register elements.

Now, FIG. 2 shows a prior art Viterbi state trellis 50 (containing a multitude of possible paths 52-56) that is arranged to decode a received convolutionally encoded signal 58. Each path 52-56 represents a possible logic transition between states with respect to time. Therefore, most trellis points 59-66 in the Viterbi trellis 50 potentially provide a point of convergence. In the specific case of FIG. 2, the thickened line 57 represents a survivor path having an output ultimately selected at trellis point 64. Additionally, the illustrated Viterbi state trellis 50 shows a four-state code by way of example, although the numbers of states may be varied according to requirements, e.g. eight-state or sixteen-state codes may be utilised in some channel coding protocols. Points 64 and 66 represent possible survivor paths through the trellis and can therefore be loosely considered as outputs. Again, as will be understood, only a relatively few states and paths have been specifically identified for the sake of clarity, although many states and paths exist within the Viterbi trellis 50. Generally, movement through the Viterbi trellis 50 can be considered as a transition between columns (or "branches") containing a plurality of logical states, with each logical state in each branch located on a possible path through the Viterbi trellis.

A mechanism for calculating likelihood (L-) values on the Viterbi state trellis of FIG. 2, is shown in FIG. 3. More particularly, logical states M and $M+2^{V-1}$ (hereinafter referred to by reference numerals 70 and 72, respectively) have calculated path (or survivor) metrics $P_A$ and $P_B$ associated respectively therewith and stored, respectively, in memory elements 76 and 78. In the particular instance of FIG. 3, logical states 70 and 72 converge to logical state 2M (hereinafter referred to by reference numeral 74) via branch (B) metrics 80 and 82 (or $B_A$ and $B_B$), respectively. Therefore, logical state 74 also has a calculated path metric $P_N$ associated therewith that is stored in memory element 84. Additionally, logical state 74 has a L-value ($L_N$) associated therewith and stored in memory element 86. Typically, the memory elements used to store the path metrics will be located in a memory block of the Viterbi decoder. As will be understood, the values of the path (survivor) metric and the L-value are calculated by the following equations:

$$P_N = \text{Maximum value of } \{(P_A + B_A), (P_B + B_B)\} \qquad \text{(eqn.1);}$$

and

$$L_N = |(P_A + B_A) - (P_B + B_B)| \qquad \text{(eqn.2).}$$

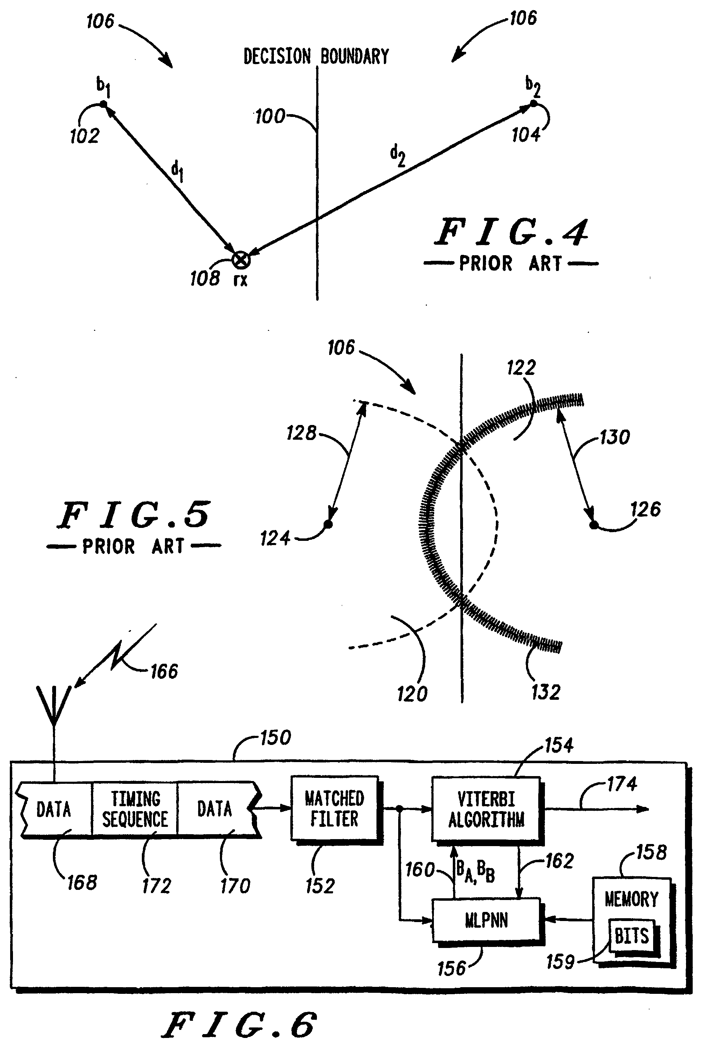

FIG. 4 represents a decision process by which a branch metric of a symbol sample influenced by a Gaussian distribution is selected in the prior art to determine a survivor path in the Viterbi trellis of FIG. 2. A decision boundary 100 is positioned equi-distant between two alternative logical states 102, 104 located within an input signal space 106.

A received symbol sample 108 (rx), positioned somewhere within the input signal space 106, is a distance $d_1$ away from logical state 102 ($b_1$) and a distance $d_2$ away from logical state 104 ($b_2$). A decision concerning the logical state actually represented by received symbol sample 108 (rx) is determined by the smallest distance (and hence the largest branch metric). Mathematically, this can be expressed as:

$$d_2 > d_1, \text{ then rx} = b_1;$$

$$d_1 > d_2, \text{ then rx} = b_2.$$

As previously explained, the decision process illustrated in FIG. 4 is satisfactory for symbol samples effected by a Gaussian distribution. However, non-Gaussian distributions have the effect of distorting (blurring) the apparent position of a received symbol sample. FIG. 5 is indicative of the uncertainty introduced into the decision process of FIG. 4 arising from a symbol sample influenced by both Gaussian and non-Gaussian distributions. A non-Gaussian interferer, such as caused by CCI, can be considered as an area of uncertainty 120, 122 about a logical state 124, 126 (respectively) in the received signal space 106, with each area of uncertainty 120, 122 swept by a vector 128, 130 indicative of a prevalent magnitude of the interferer. A Gaussian interferer, on the other hand, has the effect of producing a relatively small distortion (or perturbation 132) along a peripheral boundary of an area of uncertainty 122, for example.

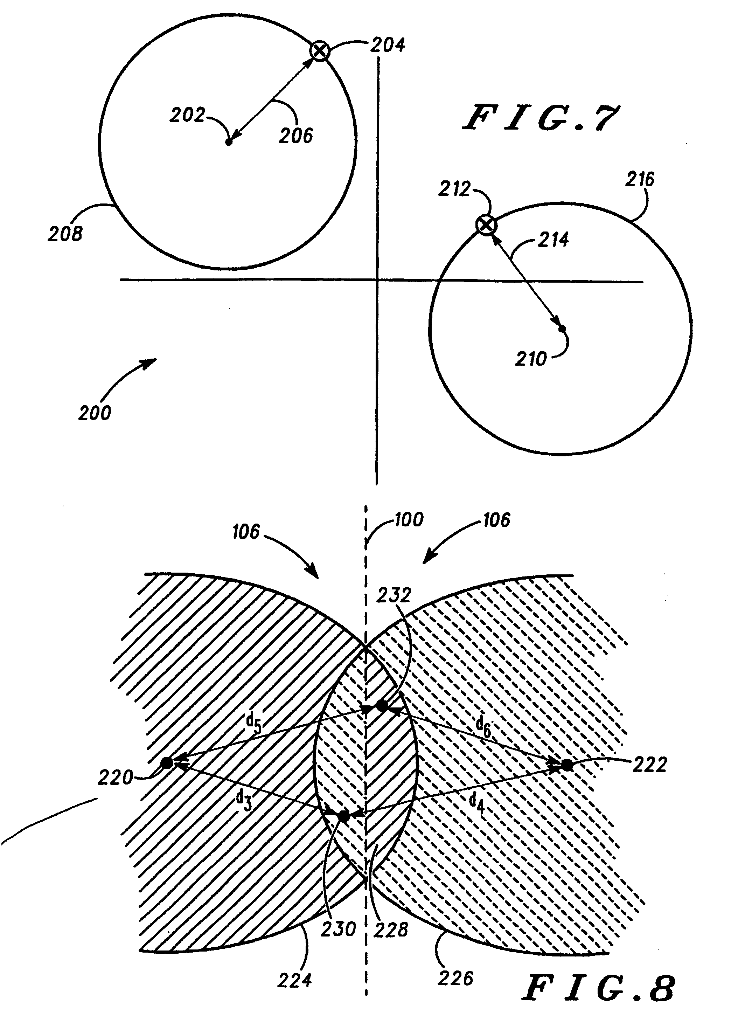

To cope with rapidly changing signal conditions, the present invention utilises a novel adaptive MLSE equaliser structure having a multi-layer perceptron neural network (MLPNN) to optimise tracking verses convergence problems in non-stationary (non-Gaussian) signal environments (and thereby to optimise soft-output decisions of the Viterbi algorithm) by performing non-linear separability of received symbol samples in the input signal space 106. Referring now to FIG. 6 there is shown a block diagram of a receiver 150 and, especially, a Viterbi decoder 152-162 according to the present invention. For the sake of both brevity and clarity, circuitry (including demodulator and output circuitry) superfluous to an understanding of the present invention has been omitted, although its implementation and function will be readily appreciated by the skilled addressee.

The receiver 150 receives signals 166, such as radio frequency signals, typically encoded with a particular data protocol. Specifically, the signals 166 contain data packets 168 and 170 interspersed with training burst sequences 172 (typically provided as header information or as a mid-amble relative to the data packets 168, 170 and containing a predetermined sequence of information bits). The data packets 168, 170 and training burst sequences 172 are applied to a matched filter 152, with an output generated therefrom provided to a Viterbi algorithm block 154 and neural network 156 (such as the a multi-layer perceptron neural network described by D.E. Rummelhart in "Learning Internal Representations by Error Propagation", Parallel Distributed Processing, Cambridge, MIT Press, 1986). As will be understood, an output 162 from the Viterbi algorithm block 154 provides information, such as accumulated path metric information, to the MLPNN 156, while an output 160 from the MLPNN 156 is coupled to the Viterbi algorithm block 154 to indicate (to the Viterbi algorithm block 154) a route of a survivor path through successive branches of the Viterbi trellis. The MLPNN 156 is also coupled to a memory 158 that is pre-stored with the predetermined sequence of reference information bits 159 of the training sequence 172. The Viterbi algorithm block 154 further provides a decoded symbol output 174 for subsequent use within the receiver 150, as will be appreciated.

The present invention modifies the Viterbi algorithm to provide an optimum decision boundary for a channel whose statistics have been altered by interferers (such as caused by CCI) having a non-Gaussian distribution. Specifically, the MLPNN 156 performs a non-linear separation of received symbol samples within the input signal space by adjusting its own internal operating configuration (weights) to construct a non-linear decision boundary between alternate logical states in the Viterbi trellis, and therefore optimises a decision boundary to compensate for interferers (such as caused by CCI) having a non-Gaussian distribution. In other words, the MLPNN 156 compensates for distortion (or errors) introduced into branch metric calculations (performed in the Viterbi algorithm block 154) by the altered the statistics of a channel.

FIG. 7 represents a calibration process for the MLPNN from which the non-linear decision boundary between alternate logical states in the Viterbi trellis is constructed. In response to the application of the training burst sequence 172 to the MLPNN 156, the MLPNN accesses the memory 158 to recover the pre-stored sequence of reference information bits 159. Consequently, a comparison by the MLPNN 156 should, ideally, reveal no spacial differences between corresponding bits of training burst sequence 172 and the pre-stored sequence of reference information bits 159 in the input signal space. However, non-Gaussian distributed interferers cause a displacement of (or onset or distortion in) received symbol samples. For example, if we consider a constellation 200 having four quadrants, a first bit 202 in the pre-stored sequence of reference information bits 159 may appear at a central location within a second quadrant of the constellation (indicative of a particular logical value), whereas a first corresponding bit 204 could be displaced by a first vector 206. Therefore, a first area (or level) of uncertainty 208 swept by the first vector 206 about the first corresponding bit 204 classifies symbol samples received within that first area of uncertainty 208 as taking a logical value of the first corresponding bit 204. Similarly, a second bit 210 in the pre-stored sequence of reference information bits 159 may appear within a fourth quadrant of the constellation 200, whereas a second corresponding bit 212 could be displaced by a second vector 214 and hence appear in a first quadrant of the constellation 200. Therefore, a second area of uncertainty 216 swept by the second vector 214 about the second corresponding bit 210 classifies symbol samples received within that second area of uncertainty 216 as taking a logical value of the second corresponding bit 210.

FIG. 8 represents how a decision boundary is massaged by the MLPNN of FIG. 7 to compensate for a non-Gaussian distribution of a symbol sample applied to the Viterbi algorithm block 154. Two alternative logical states 220 and 222 are surrounded, respectively, by areas of signal reception uncertainty 224 and 226, which areas 224 and 226 produce an overlapping region 228 across a conventional (equi-distant) decision boundary 100. The logical values of symbol samples 230 and 232 that appear on either side of the decision boundary but which are located within the overlapping (transgressing) region 228 are therefore subjected to the non-linear decision boundary condition imposed by the MLPNN in response to the correlation process performed in the calibration of the MLPNN 156. Specifically, in relation to symbol sample 230 which is a distance $d_3$ away from logical state 220 but a distance $d_4$ away from logical state 222 (where $d_4>d_3$), the non-linear decision boundary associates symbol sample 230 with logical state 222 because, although visually closer to logical state 220, symbol sample 230 is, in fact, less distant (in the sense of a measured path distance when having regard to errors introduced into its position within the input signal space 106 by the effects of the non-Gaussian distributed interferers) from logical state 222. Similarly, in relation to symbol sample 232 which is a distance $d_5$ away from logical state 220 but a distance $d_6$ away from logical state 222 (where $d_5>d_6$), the non-linear decision boundary associates (classifies) symbol sample 232 with logical state 220 because, although visually closer to logical state 222, symbol sample 232 is, in fact, less distant (in the sense of a measured path distance and when taking into account the adverse effects applied by non-Gaussian vector addition) from logical state 220.

As such, the MLPNN selects the survivor path through the Viterbi trellis based on an estimated level of uncertainly in a position of the received symbol samples in input signal space (rather than on a distance (branch metric) measurement between two alternative logical states) and hence optimises the equaliser for an interference limited environment. As previously indicated, an output 160 from the MLPNN 156 is coupled to the Viterbi algorithm block 154 to indicate a route of a survivor path through successive branches of the Viterbi trellis.

Use of the MLPNN of the present invention gives superior tracking ability, and is particularly relevant to non-synchronised environments in which the characteristics of interferers changes rapidly. Furthermore, the MLPNN may be used to adjust equaliser metrics in the MLSE to improve performance by adjusting the decision boundaries of the Viterbi algorithm such that a demodulation or decoding process becomes more robust to co-channel interference and hence temporal equalisation of a received signal can be achieved using a single antenna.

Another solution to the problem of providing a suitable step-size in the DFE requires the use of at least one additional parallel filter in the feedback path of the DFE. For example, a second parallel filter is offset (in some sense, e.g. through the use of difference weighting vectors and step-sizes) from the conventional feedback filter, while an error monitoring and decision network is arranged to monitor differences between the alternative feedback paths. Consequently, this solution can be used to improve equaliser performance when a step change (such as caused by a Doppler offset arising due to a rapid change in the speed of a mobile communication unit when compared against a burst rate for the communication, or a rapid change in signal to noise (SNR) ratio arising from over-shadowing, etc.) occurs in statistics input into the equaliser because the DFE is generally arranged to select the appropriate filter optimised for either error-surface tracking or error-surface convergence. However, this solution in isolation is again only able to cope with linearly separable patterns in the input signal, although the concepts of the present invention (namely the massaging of the decision boundary by the MLPNN to optimise the Viterbi algorithm) may be applied to adapt the learning characteristics of each parallel LMS filter.

If will, of course, be understood that the above description has been given by way of example only, and that modifications in detail, such as the implementation of the present invention within a transceiver, may be made within the scope of the invention as defined by the appended claims. Furthermore, although the present invention has been described, generally, in relation to convolutional decoding, it will be appreciated that it is applicable to MLSE equalisation of time-dispersive channels, e.g. mobile radio channels.

**Claims**

1.   A Viterbi decoder having a trellis associated therewith for decoding a symbol sample (230,232) subjected to non-Gaussian distributed interference that distorts a position of the symbol sample (230,232) in input signal space (106), the Viterbi decoder comprising:

a neural network (156) arranged to perform non-linear separation of received symbol samples (230,232) within the input signal space (106) based on comparison of a received training sequence (172) with a predetermined sequence of reference information bits of the training sequence (172) and having an adjustable operating configuration; and **characterised by** further comprising

means for adjusting the operating configuration of the neural network (156) to construct a non-linear decision boundary between alternate logical states (220,222) for the symbol sample (230,232) in the input signal space (106) wherein the neural network (156) is adapted to estimate distortion in the position of the symbol sample (230,232) and to select a path through the Viterbi trellis based on said estimation, thereby to optimise the Viterbi decoder for an interference limited environment.

2. The Viterbi decoder of claim 1, wherein the means for adjusting includes:

means for classifying an area of input signal space (106) as being indicative of each of the alternate logical states (220,222); and

means for selecting a particular one of the alternate logical states (220,222) as being that of the symbol sample (230,232) when the symbol sample (230,232) is located within its area.

3. The Viterbi decoder of claim 2, wherein an equi-distant decision boundary nominally separates the alternate logical states (220,222) and wherein the means for selecting selects the particular one of the alternate logical states (220,222) for the symbol sample (230,232) when the symbol sample (230,232) is located at a point within its associated area that transgresses the equi-distant decision boundary.

4. The Viterbi decoder of claim 1, 2 or 3, further comprising memory containing a pre-stored sequence of bits, and wherein the means for adjusting includes means for correlating respective bits of the pre-stored sequence of bits with corresponding bits of a training sequence (172) applied to the neural network (156).

5. The Viterbi decoder of claim 4, wherein the training sequence (172) is a mid-amble burst contained within a signal.

6. The Viterbi decoder of claim 4 or 5, wherein the means for correlating is arranged to associate a logical value for each bit of the pre-stored sequence of bits with a level of uncertainty defined by an area of input signal space (106) swept by a vector arising from a displacement of a respective bit of the training sequence (172), thereby to classify each bit of the training sequence (172) as taking a logical value of a corresponding bit of the pre-stored sequence of bits, wherein the displacement is indicative of a magnitude of the non-Gaussian distributed interference experienced by each bit of the training sequence (172) and whereby such displacements define the non-linear decision boundary.

7. The Viterbi decoder of any preceding claim, wherein the neural network (156) is a multi-layer perceptron neural network (156).

8. An equaliser comprising the Viterbi decoder of any preceding claim.

9. A method of Viterbi decoding a symbol sample (230,232) subjected to non-Gaussian distributed interference that distorts a position of the symbol sample (230,232) in input signal space (106) of a Viterbi decoder having a neural network (156) arranged to perform non-linear separation of received symbol samples (230,232) within the input signal space (106) based on comparison of a received training sequence (172) with a predetermined sequence of reference information bits of the training sequence (172) and having an adjustable operating configuration, the method **characterised by** comprising the step of:

adjusting the operating configuration of the neural network (156) to construct a non-linear decision boundary between alternate logical states (220,222) for the symbol sample (230,232) in the input signal space (106) estimating distortion in the position of the symbol sample (230,232), and selecting a path through the Viterbi trellis based on said estimation, thereby to optimise the Viterbi decoder for an interference limited environment.

10. The method of claim 9, wherein the step of adjusting includes the steps of:

classifying an area of input signal space (106) as being indicative of each of the alternate logical states (220,222); and

selecting a particular one of the alternate logical states (220,222) as being that of the symbol sample (230,232) when the symbol sample (230,232) is located within its area.

**Patentansprüche**

1. Viterbi-Decodierer mit einem ihm zugeordneten Gitter zum Decodieren einer Symbolprobe (230, 232), die einer Störung mit einer nicht-Gaußschen Verteilung unterliegt, die eine Position der Symbolprobe (230, 232) in dem Eingangssignalraum (106) verzerrt, wobei der Viterbi-Decodierer folgendes umfasst:

   ein neuronales Netz (156), das dazu ausgelegt ist, eine nichtlineare Trennung empfangener Symbolproben (230, 232) in dem Eingangssignalraum (106) anhand eines Vergleichs einer empfangenen Trainingsfolge (172) mit einer vorbestimmten Folge von Referenzinformationsbits der Trainingsfolge (172) durchzuführen, und eine einstellbare Betriebskonfiguration hat; und **dadurch gekennzeichnet, dass** er ferner folgendes umfasst:

   eine Einrichtung zum Einstellen der Betriebskonfiguration des neuronalen Netzes (156), um eine nichtlineare Entscheidungsgrenze zwischen alternativen logischen Zuständen (220, 222) für die Symbolprobe (230, 232) in dem Eingangssignalraum (106) zu errichten, wobei das neuronale Netz (156) dazu ausgelegt ist, die Verzerrung in der Position der Symbolprobe (230, 232) zu schätzen und anhand der Schätzung einen Weg durch das Viterbi-Gitter zu wählen, um dadurch den Viterbi-Decodierer für eine störbegrenzte Umgebung zu optimieren.

2. Viterbi-Decodierer nach Anspruch 1, bei dem die Einrichtung zum Einstellen folgendes umfasst:

   eine Einrichtung zum Klassifizieren eines Bereichs des Eingangssignalraums (106) als jeden der alternativen logischen Zustände (220, 222) anzeigend; und
   eine Einrichtung zum Auswählen eines bestimmten der alternativen logischen Zustände (220, 222) als denjenigen Zustand der Symbolprobe (230, 232), bei dem sich die Symbolprobe (230, 232) innerhalb seines Bereichs befindet.

3. Viterbi-Decodierer nach Anspruch 2, bei dem eine abstandsgleiche Entscheidungsgrenze die alternativen logischen Zustände (220, 222) nominal trennt, und bei dem die Einrichtung zum Auswählen den bestimmten der alternativen logischen Zustände (220, 222) für die Symbolprobe (230, 232) auswählt, wenn sich die Symbolprobe (230, 232) an einem Punkt innerhalb seines zugehörigen Bereichs befindet, der die abstandsgleiche Entscheidungsgrenze überschreitet.

4. Viterbi-Decodierer nach Anspruch 1, 2 oder 3, der ferner einen Speicher umfasst, der eine vorab gespeicherte Folge von Bits enthält, und bei dem die Einrichtung zum Einstellen eine Einrichtung zum Korrelieren jeweiliger Bits der vorab gespeicherten Folge von Bits mit entsprechenden Bits einer auf das neuronale Netz (156) angewandten Trainingsfolge (172) umfasst.

5. Viterbi-Decodierer nach Anspruch 4, bei dem die Trainingsfolge (172) ein in einem Signal enthaltener Midambel-Burst ist.

6. Viterbi-Decodierer nach Anspruch 4 oder 5, bei dem die Einrichtung zum Korrelieren dazu ausgelegt ist, einen logischen Wert für jedes Bit der vorab gespeicherten Folge von Bits mit einem Niveau der Unsicherheit zu assoziieren, das durch einen Bereich des Eingangssignalraums (106) definiert wird, der von einem Vektor abgetastet wird, der auf eine Verschiebung eines jeweiligen Bits der Trainingsfolge (172) zurückzuführen ist, um dadurch jedes Bit der Trainingsfolge (172) als einen logischen Wert eines entsprechenden Bits der vorab gespeicherten Folge von Bits annehmend zu klassifizieren, wobei die Verschiebung eine Größe der Störung mit nicht-Gaußscher Verteilung anzeigt, die jedes Bit der Trainingsfolge (172) erfährt, und wodurch solche Verschiebungen die nichtlineare Entscheidungsgrenze definieren.

7. Viterbi-Decodierer nach einem der vorhergehenden Ansprüche, bei dem das neuronale Netz (156) ein mehrlagiges neuronales Perzeptron-Netz (156) ist.

8. Entzerrer mit dem Viterbi-Decodierer nach einem der vorhergehenden Ansprüche.

9. Verfahren zur Viterbi-Decodierung einer Symbolprobe (230, 232), die einer Störung mit einer nicht-Gaußschen Verteilung unterliegt, die eine Position der Symbolprobe (230, 232) in dem Eingangssignalraum (106) eines Viterbi-Decodierers verzerrt, der ein neuronales Netz (156) hat, das dazu ausgelegt ist, eine nichtlineare Trennung empfangener Symbolproben (230, 232) in dem Eingangssignalraum (106) anhand eines Vergleiches einer empfangenen Trainingsfolge (172) mit einer vorbestimmten Folge von Referenzinformationsbits der Trainingsfolge (172) durchzuführen, und der eine einstellbare Betriebskonfiguration hat, wobei das Verfahren **dadurch gekennzeichnet ist, dass** es die folgenden Schritte umfasst:

die Betriebskonfiguration des neuronalen Netzes (156) wird eingestellt, um eine nichtlineare Entscheidungsgrenze zwischen alternativen logischen Zuständen (220, 222) für die Symbolprobe (230, 232) in dem Eingangssignalraum (106) zu errichten, die Verzerrung in der Position der Symbolprobe (230, 232) wird geschätzt, und anhand der Schätzung wird ein Weg durch das Viterbi-Gitter ausgewählt, um dadurch den Viterbi-Decodierer für eine störbegrenzte Umgebung zu optimieren.

**10.** Verfahren nach Anspruch 9, bei dem der Schritt des Einstellens die folgenden Schritte umfasst:

ein Bereich des Eingangssignalraums (106) wird als jeden der alternativen logischen Zustände (220, 222) anzeigend klassifiziert; und
ein bestimmter der alternativen logischen Zustände (220, 222) wird als derjenige logische Zustand der Symbolprobe (230, 232) ausgewählt, bei dem sich die Symbolprobe (230, 232) in seinem Bereich befindet.

## Revendications

**1.** Décodeur de Viterbi auquel est associé un treillis, servant à décoder un échantillon de symboles (230, 232) soumis à des interférences à distribution non gaussienne qui déforment la position de l'échantillon de symboles (230, 232) dans l'espace de signaux d'entrée (106), le décodeur de Viterbi comprenant :

un réseau neuronal (156) disposé de manière à réaliser une séparation non linéaire des échantillons de symboles reçus (230, 232) à l'intérieur de l'espace de signaux d'entrée (106) sur la base de la comparaison d'une séquence d'apprentissage reçue (172) avec une séquence prédéterminée de bits d'informations de référence de la séquence d'apprentissage (172) et ayant une configuration de fonctionnement ajustable ; et

**caractérisé en ce qu'**il comprend en outre un moyen servant à ajuster la configuration de fonctionnement du réseau neuronal (156) afin de construire une frontière de décision non linéaire entre des états logiques alternants (220, 222) pour l'échantillon de symboles (230, 232) dans l'espace de signaux d'entrée (106), où le réseau neuronal (156) est conçu pour estimer la déformation de la position de l'échantillon de symboles (230, 232) et pour sélectionner un trajet dans le treillis de Viterbi sur la base de ladite estimation, de manière à ainsi optimiser le décodeur de Viterbi pour un environnement limité d'interférences.

**2.** Décodeur de Viterbi selon la revendication 1, où ledit moyen d'ajustement comporte :

un moyen servant à classer une zone de l'espace de signaux d'entrée (106) comme étant indicative de chacun des états logiques alternants (220, 222) ; et
un moyen servant à sélectionner un état particulier parmi les états logiques alternants (220, 222) comme étant celui de l'échantillon de symboles (230, 232) lorsque l'échantillon de symboles (230, 232) est placé à l'intérieur de sa zone.

**3.** Décodeur de Viterbi selon la revendication 2, où une frontière de décision équidistante sépare nominalement les états logiques alternants (220, 222) et où le moyen de sélection sélectionne l'état particulier parmi les états logiques alternants (220, 222) pour l'échantillon de symboles (230, 232) lorsque l'échantillon de symboles (230, 232) est placé en un point situé à l'intérieur de sa zone associée qui transgresse la frontière de décision équidistante.

**4.** Décodeur de Viterbi selon la revendication 1, 2 ou 3, comprenant en outre une mémoire qui contient une séquence préemmagasinée de bits, et où le moyen d'ajustement comporte un moyen servant à corréler des bits respectifs de la séquence préemmagasinée des bits avec des bits correspondants d'une séquence d'apprentissage (172) appliquée au réseau neuronal (156).

**5.** Décodeur de Viterbi selon la revendication 4, où la séquence d'apprentissage (172) est une salve de médiambule contenue à l'intérieur d'un signal.

6. Décodeur de Viterbi selon la revendication 4 ou 5, où le moyen de corrélation est conçu pour associer une valeur logique de chaque bit de la séquence préemmagasinée de bits avec un niveau d'incertitude défini par une zone de l'espace de signaux d'entrée (106) balayée par un vecteur résultant d'un déplacement d'un bit respectif de la séquence d'apprentissage (172), de manière à ainsi classer chaque bit de la séquence d'apprentissage (172) comme prenant la valeur logique d'un bit correspondant de la séquence préemmagasinée de bits, où le déplacement est indicatif de la grandeur de l'interférence à distribution non gaussienne qui est subie par chaque bit de la séquence d'apprentissage (172) et, ainsi, ces déplacements définissent la frontière de décision non linéaire.

7. Décodeur de Viterbi selon l'une quelconque des revendications précédentes, où le réseau neuronal (156) est un réseau neuronal à perceptron multicouche (156).

8. Egaliseur comprenant le décodeur de Viterbi tel que défini dans l'une quelconque des revendications précédentes.

9. Procédé de décodage Viterbi d'un échantillon de symboles (230, 232) soumis à des interférences à distribution non gaussienne qui déforment la position de l'échantillon de symboles (230, 232) dans l'espace de signaux d'entrée (106) d'un décodeur de Viterbi ayant un réseau neuronal (156) destiné à effectuer la séparation non linéaire d'échantillons de symboles reçus (230, 232) à l'intérieur de l'espace de signaux d'entrée (106) sur la base de la comparaison d'une séquence d'apprentissage reçue (172) avec une séquence prédéterminée de bits d'informations de référence de la séquence d'apprentissage (172) et ayant une configuration de fonctionnement ajustable, le procédé étant **caractérisé en ce qu'**il comprend l'opération suivante :

ajuster la configuration de fonctionnement du réseau neuronal (156) afin de construire une frontière de décision non linéaire entre états logiques alternants (220, 222) pour l'échantillon de symboles (230, 232) de l'espace de signaux d'entrée (106), estimer la déformation de la position de l'échantillon de symboles (230, 232), et sélectionner un trajet dans le treillis de Viterbi sur la base de ladite estimation, de manière à ainsi optimiser le décodeur de Viterbi pour un environnement limité d'interférences.

10. Procédé selon la revendication 9, où l'opération d'ajustement comporte les opérations suivantes :

classer une zone de l'espace de signaux d'entrée (106) comme étant indicative de chacun des états logiques alternants (220, 222) ; et
sélectionner un état particulier parmi les états logiques alternants (220, 222) comme étant celui de l'échantillon de symboles (230, 232) lorsque l'échantillon de symboles (230, 232) est placé à l'intérieur de sa zone.

$$\underline{10} \quad \boldsymbol{FIG.1}$$

—PRIOR ART—

$$\boldsymbol{FIG.2}$$

—PRIOR ART—

$$\boldsymbol{FIG.3}$$

—PRIOR ART—

*106*

DECISION BOUNDARY

*106*

$b_1$

*100*

$b_2$

*102*

*104*

$d_1$

$d_2$

*108* rx

## FIG.4
— PRIOR ART —

*106*

*122*

*128*

*130*

*124*

*126*

## FIG.5
— PRIOR ART —

*120*

*132*

*166*

*150*

*154*

| DATA | TIMING SEQUENCE | DATA | | MATCHED FILTER | | VITERBI ALGORITHM |

*174*

*168*

*172*

*170*

*152*

*160* $B_A, B_B$

*162*

*158*

MLPNN

MEMORY

BITS

*156*

*159*

## FIG.6

*F I G.7*

*F I G.8*